# EUROPEAN PATENT APPLICATION

(11) **EP 4 787 776 A1**
(43) Date of publication of application: **05.08.2026**
(21) Application number: 26153364.0
(22) Date of filing: 22.01.2026
(51) Int. Cl.: H04L 9/40, H04L 67/02, H04L 67/14, H04L 67/141, H04L 67/146

(54) **INFORMATION PROCESSING APPARATUS AND COMMUNICATION METHOD**

(30) Priority: 29.01.2025 JP 2025013223
(71) Applicant: Sharp Kabushiki Kaisha, Sakai City, Osaka 590-8522 (JP)
(72) Inventor: TOMITA, Chikako, Osaka, 590-8522 (JP)
(74) Representative: Müller Hoffmann & Partner

(57) **Abstract**

The present disclosure includes: a communicator capable of communicating with an other device via an established communication channel; and a controller. When receiving a request to establish a session from the other device via the communication channel, the controller generates session information for identifying the session according to a state of the communication channel, through which the request is received, and transmits the generated session information to the other device via the communicator. When the session information is received from the other device via the communicator, and the state of the communication channel, through which the session information is received, does not conform to a state of the communication channel corresponding to the session information, the controller invalidates the session based on the session information.

## Description

### BACKGROUND OF THE INVENTION

### Field of the Invention

The present disclosure relates to an information processing apparatus and the like.

### Description of the Background Art

For example, such an invention is disclosed that prevents significant deterioration of execution efficiency and creation efficiency of a program while realizing safe session management.

An object of the present disclosure is to provide an information processing apparatus and the like capable of making appropriate communication regardless of a communication type, for example.

### SUMMARY OF THE INVENTION

An information processing apparatus according to the present disclosure includes: a communicator capable of communicating with an other device via an established communication channel; and one or more controllers. When receiving a request to establish a session from the other device via the communication channel, the one or more controllers generate session information for identifying the session according to a state of the communication channel, through which the request is received, and transmit the generated session information to the other device via the communicator. When the session information is received from the other device via the communicator, and the state of the communication channel, through which the session information is received, does not conform to a state of the communication channel corresponding to the session information, the one or more controllers invalidate the session based on the session information.

An information processing apparatus according to the present disclosure is an information processing apparatus capable of establishing a first communication channel established by a Hypertext Transfer Protocol (HTTP) protocol and a second communication channel established by a Hypertext Transfer Protocol Secure (HTTPS) protocol with an other device, and includes: a session information transmitter that transmits session information not added with a Secure attribute to the other device when receiving a session request from the other device via the first communication channel, and transmits session information added with the Secure attribute to the other device when receiving the session request from the other device via the second communication channel; and a session information receiver that receives the session information from the other device via the first communication channel or the second communication channel. When the session information is received via the first communication channel, and the Secure attribute is included in the session information, a session based on the session information is invalidated. When the session information is received via the second communication channel, and the Secure attribute is not included in the session information, the session based on the session information is invalidated.

A communication method according to the present disclosure is a communication method for establishing a session with an other device via a communication channel, and includes: generating session information for identifying a session with the other device according to a state of the communication channel; transmitting the generated session information to the other device; and, when the session information is received from the other device, and the state of the communication channel, through which the session information is received, does not conform to a state of the communication channel corresponding to the session information, invalidating the session based on the session information.

The present disclosure can provide the information processing apparatus and the like capable of making appropriate communication regardless of a communication type, for example.

### BRIEF DESCRIPTION OF THE DRAWINGS

FIG. 1 is a view illustrating a general outline of a system according to a first embodiment.
FIG. 2 is a diagram illustrating a hardware configuration of an image forming apparatus according to the first embodiment.
FIG. 3 is a diagram illustrating a hardware configuration of a terminal device according to the first embodiment.
FIG. 4 is a diagram illustrating a software configuration of the image forming apparatus according to the first embodiment.
FIG. 5A is a table illustrating an example of a session list according to the first embodiment, and 5B is a view illustrating an example of a cookie according to the first embodiment.
FIG. 6 is a flowchart illustrating operation of processing according to the first embodiment.
FIG. 7 is a flowchart illustrating the operation of the processing according to the first embodiment.
FIG. 8 is a view illustrating an example of a system setting screen according to a second embodiment.
FIG. 9 is a flowchart illustrating the operation of the processing according to the first embodiment.

### DESCRIPTION OF THE PREFERRED EMBODIMENTS

Hereinafter, embodiments for carrying out the present disclosure will be described with reference to the drawings. The embodiments described below are merely examples of the present disclosure, and the contents of the present disclosure should not be construed as limited on the basis of the following description.

A cookie function is available as a function to manage and maintain access by the same user when the user uses a web site. The cookie function can improve convenience of a web service and provide the service according to the user's need by using a cookie (session information) that is acquired from an information processing apparatus accessed by the user.

However, there are such risks that a session is hijacked and that the user is damaged by impersonation when the cookie as the session information is eavesdropped by a third party. In order to reduce these risks, it is recommended to specify a Secure attribute in the cookie.

When the Secure attribute is specified, it is specified that a terminal device as an access origin does not transmit the cookie in Hypertext Transfer Protocol (HTTP) communication, which is a non-secure communication channel through which information flows in plain text, and transmits the cookie only in Hypertext Transfer Protocol Secure (HTTPS) communication, which is a secure communication channel with high safety.

In the case where the Secure attribute is specified to all the cookies, security is improved. However, when the HTTP is used due to a certain circumstance such as limitation of the device, the session cannot be managed by the cookie, and it becomes impossible to appropriately manage and maintain the access by the user.

An information processing apparatus for solving one or more of these problems will be described in the following embodiments.

### 1. First Embodiment

### 1.1 Overall System

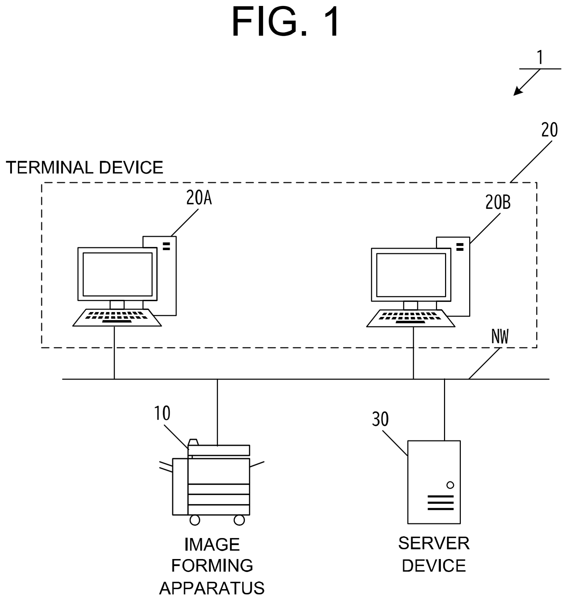

FIG. 1 is a view illustrating a general outline of a system 1. FIG. 1 is a schematic view illustrating the system 1 that includes an image forming apparatus 10 as an example of the information processing apparatus.

The system 1 may include, in addition to the image forming apparatus 10: a terminal device 20 communicable with the image forming apparatus 10 through a network NW; and a server device 30. For example, the one or more terminal devices 20 may be connected to the system 1. In FIG. 1, a terminal device 20A and a terminal device 20B are connected to the network NW. Hereinafter, when the terminal device 20 is simply referred, the terminal devices 20A, 20B are not particularly specified in the description, and either one thereof can be adopted.

The image forming apparatus 10 is an apparatus that is referred to as a multifunction machine or a multifunction peripheral/printer/product (MFP), for example. For example, when executing a job (a print job), the image forming apparatus 10 can form an image on a sheet of paper as a recording medium. The image forming apparatus 10 can execute, as jobs to be executed, jobs for plural types of processing that are copy processing, FAX processing, scan processing, and print processing.

The terminal device 20 is a device other than the image forming apparatus 10 and is a device used by a user or an administrator. For example, the user transmits the print job from the terminal device 20 to the image forming apparatus 10. The image forming apparatus 10 executes the received print job for printing on the recording sheet based on print data, for example. The administrator can make settings of the image forming apparatus 10, for example, by accessing the image forming apparatus 10 from the terminal device 20.

The server device 30 may manage user information, for example. The server device 30 may collectively manage the user information by using a Lightweight Directory Access Protocol (LDAP) service, for example.

The terminal device 20 and the server device 30 may be provided in the system 1 as needed. For example, an external service (such as a service provided on a cloud) may be used for the server device 30.

The network NW, which connects the image forming apparatus 10, the terminal device 20, and the server device 30, may be any communication line or communication system, and may use the communication system, such as a wired or wireless local area network (LAN), the Internet, a public line network, mobile communication (such as 4G/5G/6G), or a next-generation telephone network.

A description will be made on an example in which elements of the system 1 in FIG. 1 are connected to the same network NW. However, the system 1 may be configured that the elements are connected to plural networks via the Internet.

### 1.2 Hardware Configuration

### 1.2.1 Image Forming Apparatus

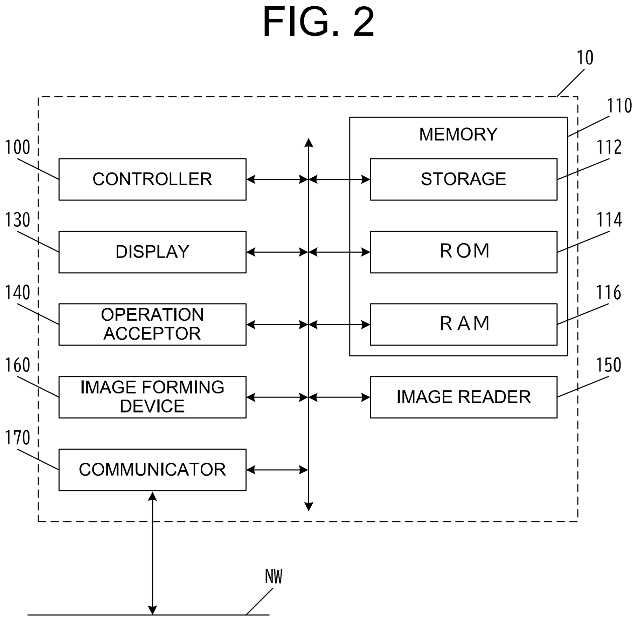

A description will be made on a hardware configuration of the image forming apparatus 10 in the present embodiment with reference to FIG. 2. FIG. 2 is a diagram illustrating an example of the image forming apparatus 10.

As illustrated in FIG. 2, the image forming apparatus 10 includes: one or more controllers 100 as control devices; one or more modules of memory 110 (a storage 112, read only memory (ROM) 114, and random access memory (RAM) 116) as storage devices; one or more displays 130 as display devices; one or more operation acceptors 140 as operation devices; one or more image readers 150 as reading devices; one or more image forming devices 160 as printers; and one or more communicators 170 as communication devices.

The controller 100 controls the entire image forming apparatus 10. The controller 100 reads and executes various programs that are stored in the memory 110 (for example, the storage 112 and the ROM 114), and thereby implements various functions. The controller 100 may be realized by one or more control devices/arithmetic devices (central processing units (CPUs) or systems on a chip (SoCs)). The controller 100 may include one or more control circuits.

The memory 110 stores the programs, data, and the like. The memory 110 may include the storage 112, the ROM 114, the RAM 116, and the like, for example. In addition, the memory 110 may be configured to include cache memory and the like that are provided in the other functional devices (for example, the controller 100, the communicator 170, and the like).

The storage 112 is a non-volatile storage device capable of storing the programs and the data. For example, the storage 112 may be formed by a storage device such as a hard disk drive (HDD) or a solid-state drive (SSD). Alternatively, the storage 112 may be formed by Universal Serial Bus (USB) memory connectable to the outside. Further alternatively, the storage 112 may be a memory area on the cloud.

The ROM 114 is non-volatile memory capable of retaining the programs and the data even when power is turned off.

The RAM 116 is main memory that is mainly used when the controller 100 executes the processing. The RAM 116 is rewritable memory that temporarily retains the program read from the storage 112 or the ROM 114 and the data including a processing execution result.

The display 130 is a display device capable of showing various pieces of information and an execution screen. The display 130 may be a display device such as a liquid-crystal display (LCD), an organic Electro Luminescence (EL) display, or an electrophoretic display. The display 130 includes an interface to which the display device can be connected. For example, the display 130 may be formed by an external display device that is connected via High-Definition Multimedia Interface (HDMI)^{®}, Digital Visual Interface (DVI), or DisplayPort.

The operation acceptor 140 is an operation device that allows the user to input an operation. For example, the operation acceptor 140 may be an operation device such as a touch panel integrated with the display 130 or an operation button. Alternatively, the operation acceptor 140 may be an operation device such as a keyboard or a mouse. The operation acceptor 140 may include an interface (such as the USB) to which the operation device can be connected. For example, the image forming apparatus 10 may be connected to a different operation device (an operation device with a touch panel).

The image reader 150 reads and outputs a document (an image) as image data. The image reader 150 is a scanner, for example, and may be a reading device that uses a charge-coupled device (CCD) or a contact image sensor (CIS). The image reader 150 may read the image data from the recording medium such as the USB memory or an SD card^{®}. Alternatively, the image reader 150 may read the image data from a terminal device, such as a smartphone connected to the image forming apparatus 10, via the communicator 170.

The image forming device 160 forms the image on the recording sheet, for example. For example, the image forming device 160 includes an image carrier, forms a toner image on the image carrier, transfers the image on the image carrier onto the recording sheet, and thereby forms the image. The image forming device 160 may be configured as an image forming apparatus such as the printer. Alternatively, the image forming device 160 may electronically form the image as an image file.

The communicator 170 is a communication interface that communicates with other devices. For example, the communicator 170 may be a network interface capable of providing wired connection such as Ethernet^{®} or wireless connection such as IEEE 802.11a/b/g/n. In addition, the communicator 170 may have a function to serve as a base station of the other devices for the wireless communication.

In the present embodiment, the communicator 170 can communicate with the other devices via the network NW. The communicator 170 may have a communication method for connecting with the terminal device such as the smartphone. For example, the communicator 170 may communicate with the terminal device by a communication method of short-range wireless communication such as Bluetooth^{®} or near-field communication (NFC).

Here, each of the terminal device 20 and the server device 30 may be a general-purpose information processing apparatus. For example, each of the terminal device 20 and the server device 30 includes one or more functions of a controller, memory (a storage, ROM, and RAM), a display, an operation acceptor, a communicator, and the like. Since the configurations of the terminal device 20 and the server device 30 are obvious, the detailed description thereon will not be made.

### 1.2.2 Terminal Device and Server Device

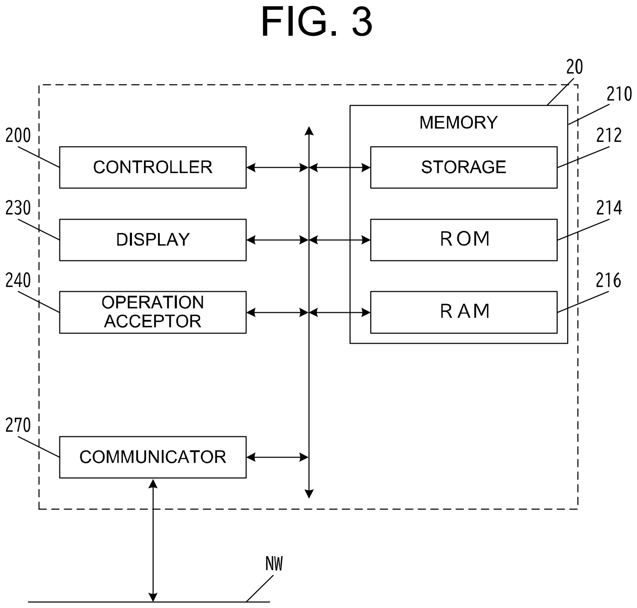

The terminal device 20 and the server device 30 as the other devices will each be described as a device having a general hardware configuration. For example, as illustrated in FIG. 3, the terminal device 20 includes a controller 200, memory 210 (a storage 212, ROM 214, and RAM 216), a display 230, an operation acceptor 240, and a communicator 270. Similarly, the server device 30 includes a controller, memory, a communicator, and the like.

Each of the terminal device 20 and the server device 30 has a configuration of a general device (for example, a control device (CPU) for the controller 200 and a storage device (memory, an HDD, an SSD, or the like) for the memory 210), and can be realized sufficiently by a person skilled in the art on the basis of the contents of the description of the image forming apparatus 10. Thus, the description on each of these functions is omitted.

### 1.3 Software Configuration

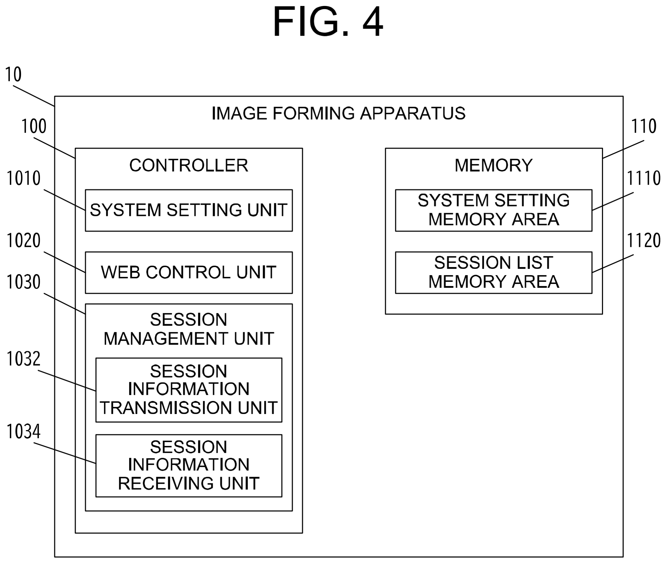

A description will be made on a main software configuration of the image forming apparatus 10 in the system 1 with reference to FIG. 4. The software configuration illustrated in FIG. 4 mainly illustrates components required in the present embodiment, and the other components are omitted. For example, the image forming apparatus 10 may further include components, such as an image processor and a power controller, that provide functions required for the image forming apparatus 10.

The controller 100 of the image forming apparatus 10 functions as the following components by executing the programs (applications) stored in the memory 110.

A system setting unit 1010 makes settings of a system (hereinafter referred to as "system settings") for operating the image forming apparatus 10. The system settings that are made by the system setting unit 1010 are stored in a system setting memory area 1110 of the memory 110.

The system setting memory area 1110 stores, as the system settings, various settings that are required for the operation of the image forming apparatus 10. An example of information that is stored in the system settings is information on a setting as to whether the image forming apparatus 10 validates or invalidates an HTTPS port.

A WEB control unit 1020 provides a World Wide Web (WEB) screen. For example, the WEB control unit 1020 makes the HTTP communication or the HTTPS communication with the terminal device 20 that is connected thereto via the communicator 170, transmits HTML or XML information, and thereby provides the WEB screen to the terminal device 20. In addition, the WEB control unit 1020 displays the WEB screen on the display 130 in response to a request from the controller 100.

The user can make the settings of the image forming apparatus 10 on the displayed WEB screen as a user interface. For example, the WEB control unit 1020 may provide a processing screen of the image forming apparatus 10 and thereby accept an operation on the image forming apparatus 10 from the operation acceptor 140 or a remote operation from the terminal device 20.

A session management unit 1030 manages a session with the terminal device 20. As will be described in detail below, the image forming apparatus 10 establishes a communication channel with the other device via the communicator 170. The session management unit 1030 may have a function as a session information transmission unit 1032 that transmits session information to the other device, and may have a function as a session information receiving unit 1034 that receives the session information from the other device. For example, the session information transmission unit 1032 can transmit a cookie as an example of the session information to the other device, and the session information receiving unit 1034 can receive a cookie from the other device.

Here, the communication channels include a non-secure communication channel (an unencrypted communication channel) and a secure communication channel (an encrypted communication channel).

For example, a non-secure first communication channel is a communication channel using the HTTP communication (communication using an HTTP protocol). A corresponding secure second communication channel is a communication channel using the HTTPS communication (communication using an HTTPS protocol). That is, compared to the first communication channel, the second communication channel is encrypted (for example, by Secure Sockets Layer (SSL)).

For example, a client transmits an HTTP request to a WEB server for communication of a WEB content. When responding to the HTTP request that is received from the client, the WEB server transmits an HTTP response to the client. At this time, since the communication channel using the HTTPS communication is encrypted, the HTTP request and the HTTP response are also encrypted and transmitted/received.

In the above example, the description has been made on the communication with the WEB server as the example. Similarly, the following combinations are considered as combinations of the non-secure first communication channel/the secure second communication channel.
- Simple Mail Transfer Protocol (SMTP)/Simple Mail Transfer Protocol Secure (SMTPS)
- File Transfer Protocol (FTP)/SSH File Transfer Protocol (SFTP)
The session is generated by using the communication channel based on these protocols.

In a case of first access from the terminal device 20 (for example, in the case where only the HTTP request is received from the terminal device 20), the session management unit 1030 generates the cookie as the session information, includes the cookie in the response (for example, the HTTP response), and transmits the response to the terminal device 20 as a transmission source. In addition, the session management unit 1030 stores the generated session information in a session list in a session list memory area 1120.

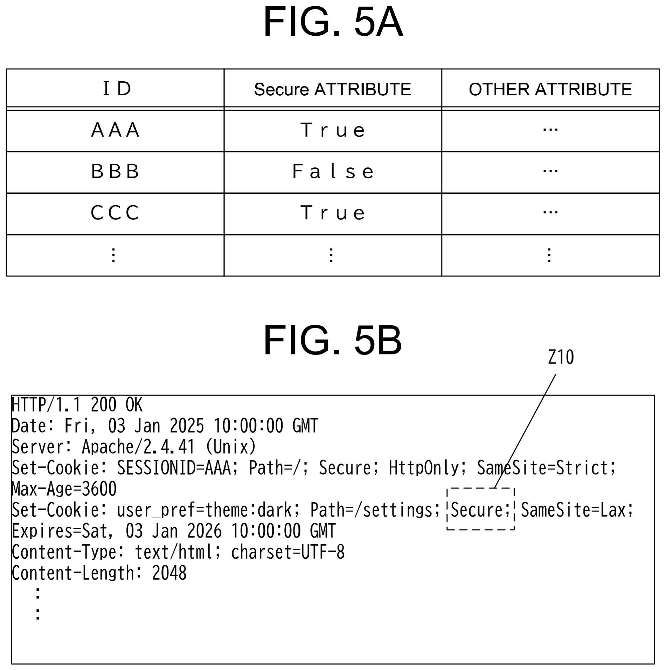

FIG. 5A illustrates a schematic example of the session list. FIG. 5B illustrates an example of the cookie.

The session management unit 1030 stores, as the session list, session IDs (for example, "AAA") and attributes corresponding to the session IDs. In the present embodiment, a Secure attribute is stored in association with the session ID. The Secure attribute is an attribute that requests the terminal device 20 as the client to transmit the cookie only in the HTTPS communication. For example, as indicated by Z10 in FIG. 5B, the attribute is specified as "Secure" in a header "Set-Cookie:" of the HTTP response.

Here, to store the Secure attribute, "ON" may be included in the cookie when the Secure attribute is added. On the contrary, when the Secure attribute is unnecessary (when the Secure attribute is not added), "OFF" may be included in the cookie, or the Secure attribute itself may not be included in the cookie.

FIG. 5A is merely the example, and the session list only needs to be stored for each session ID in a manner that presence (True) or absence (False) of the Secure attribute in the cookie of the session ID is apparent. The session list may also store an other attribute of the cookie. Furthermore, the session list may store the session information itself.

A detailed description will hereinafter be made on a case of second or subsequent access from the terminal device 20 to the session management unit 1030 (for example, a case where the HTTP request having the cookie is received from the terminal device 20) with reference to a processing flow.

### 1.4 Processing Flow

Hereinafter, a description will be made on a processing flow in the present embodiment with reference to the accompanying drawings. The description on the following processing will be centered on points that clarify features of the present disclosure. The functional devices, which have been described with reference to FIG. 4, preferably and appropriately execute the following processing. However, for convenience of the description, it is assumed that the controller 100 executes such processing.

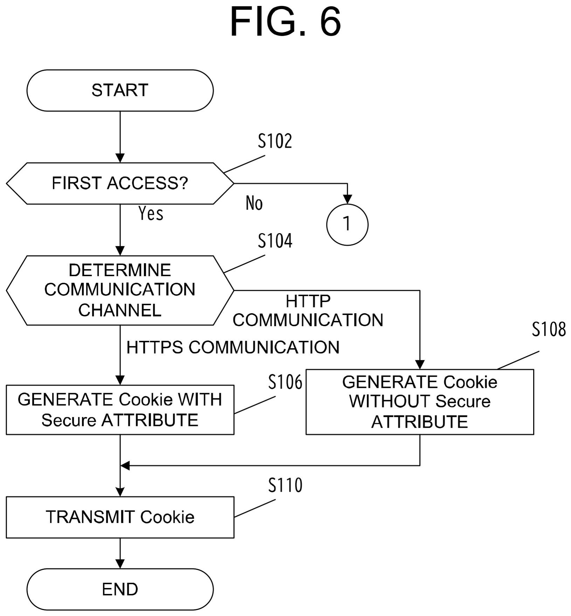

First, a description will be made on processing illustrated in FIG. 6. When there is the access (the HTTP request) that is a request to establish the session from the terminal device 20 as the client, the controller 100 checks whether the access is the first access (S102). For the determination of whether the access from the terminal device 20 is the first access, when the cookie is not included in the HTTP request, for example, the controller 100 may determine that the access is the first access.

For example, when the session ID of the access is not stored in the session list, the controller 100 may determine that the access is the first access regardless of whether the cookie is included in the HTTP request. Accordingly, the controller 100 can determine that the access from the terminal device 20 is the first access, for example, when the session information is timed out, when the session information is deleted due to excess of the total number of the sessions, which can be retained, by the access from an other user, or the like.

The controller 100 determines the communication channel (S104). That is, the controller 100 determines whether the HTTP request is made by the HTTP communication or the HTTPS communication (that is, communication using TLS/SSL) (S104). For example, the controller 100 may determine that the communication is the HTTP communication when a communication port through which the HTTP request is received is 80, and may determine that the communication is the HTTPS communication when the communication port through which the HTTP request is received is 443. Even in a case of the communication other than the HTTP communication, the controller 100 may determine whether the communication channel is a secure communication channel or the non-secure communication channel on the basis of the port number. For example, the controller 100 may determine that the communication channel is not secure when the communication port through which the data is received from the terminal device 20 is 25 (SMTP), and may determine that the communication channel is secure when the communication port is 465 (SMTPS).

The above port numbers have been described by using the predetermined port numbers (well-known port numbers). However, a new port number may be set for each communication channel. In addition, the controller 100 may determine whether the communication channel is a secure communication channel or the non-secure communication channel not on the basis of the port number but on the basis of information (for example, a tag indicating the attribute, ID information, or the like) that is included in header information of the HTTP request, for example.

If the HTTP request is made by the HTTPS communication (S104; HTTPS communication), the controller 100 generates the cookie with the Secure attribute (S106).

Here, the controller 100 stores, in the session list, the session ID and the Secure attribute of "True" in association with the session ID. The controller 100 may store, in the session list, an other attribute, which is further included in the cookie, in association with the session ID.

On the other hand, if the HTTP request is made by the HTTP communication (S104; HTTP communication), the controller 100 generates the cookie without the Secure attribute (S108).

Here, the controller 100 stores, in the session list, the session ID and the Secure attribute of "False" in association with the session ID. The controller 100 may store, in the session list, an other attribute, which is further included in the cookie, in association with the session ID.

The controller 100 transmits the generated cookie to the terminal device 20 as the transmission source of the HTTP request (S110). For example, the controller 100 transmits the HTTP response including the cookie.

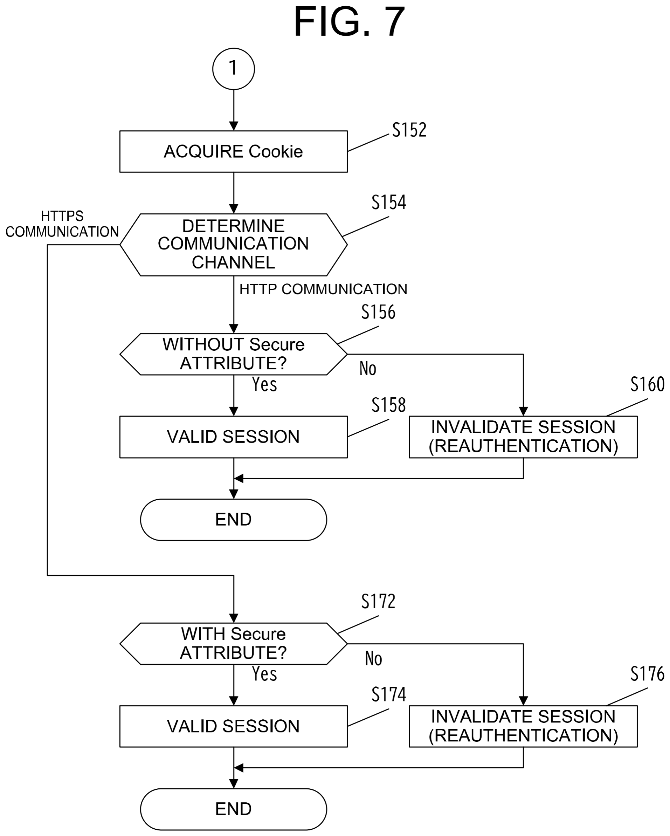

In a case of the second or subsequent access from the terminal device 20, the controller 100 executes processing in FIG. 7 (S102 in FIG. 6; No → S152 in FIG. 7). Here, the controller 100 acquires the cookie in the HTTP request (S152).

At this time, the controller 100 determines whether the HTTP request is made by the HTTP communication or the HTTPS communication (that is, the communication using TLS/SSL) (S154).

If the HTTP request is made by the HTTP communication (S154; HTTP communication), and the cookie does not have the Secure attribute, the controller 100 determines that the session based on the cookie is valid, and continues the communication of the session (S156; Yes → S158). That is, the controller 100 determines that a state of the communication channel accessed from the terminal device 20 conforms to a state of the communication channel specified from the cookie as the session information, and determines that the session is valid.

On the other hand, if the HTTP request is made by the HTTP communication (S154; HTTP communication), but the cookie has the Secure attribute (S156; No), the controller 100 invalidates the session (S160). For example, the controller 100 discards the cookie and performs reauthentication.

This means that the controller 100 invalidates the session when determining that the state of the communication channel accessed from the terminal device 20 does not conform to the state of the communication channel specified from the cookie. More specifically, the controller 100 executes the following processing. That is, since the HTTP communication is made with the terminal device 20, the communication channel is not secure. However, in the case where the Secure attribute is included in the cookie as the session information, the state of the communication channel specified from the session information is a secure communication channel. Just as described, the current communication channel is not consistent with the communication channel specified from the cookie.

Accordingly, for example, even when the content of the cookie, such as the session ID (for example, a value of the attribute other than the Secure attribute), is consistent, the presence/absence of the Secure attribute and the state of the communication channel (the type of communication: HTTP communication/HTTPS communication) are inconsistent. Thus, the controller 100 determines that the cookie is inconsistent, and invalidates the session.

If the HTTP request is made by the HTTPS communication (S154; HTTPS communication), and the cookie has the Secure attribute, the controller 100 determines that the session based on the cookie is valid, and continues the communication of the session (S172; Yes → S174). That is, the controller 100 determines that the state of the communication channel accessed from the terminal device 20 conforms to the state of the communication channel specified from the cookie as the session information, and determines that the session is valid.

On the other hand, if the HTTP request is made by the HTTPS communication (S154; HTTPS communication), but the cookie does not have the Secure attribute (S172; No), the controller 100 invalidates the session based on the cookie (S176). For example, the controller 100 may discard the cookie and perform the reauthentication.

This means that the controller 100 invalidates the session when determining that the state of the communication channel accessed from the terminal device 20 does not conform to the state of the communication channel specified from the cookie. More specifically, the controller 100 executes the following processing. That is, since the HTTPS communication is made with the terminal device 20, the communication channel is secure. However, in the case where the Secure attribute is not included in the cookie as the session information, the state of the communication channel specified from the session information is the non-secure communication channel. Just as described, the current communication channel is not consistent with the communication channel specified from the cookie. Thus, the controller 100 invalidates the session.

The controller 100 determines the presence/absence of the Secure attribute in S156 and S172. However, the type of the current communication may be compared, or the current Secure attribute may be compared with the Secure attribute stored in the session list.

For example, it is assumed that the session ID of the connection from the terminal device 20A is "AAA" and the session ID of the connection from the terminal device 20B is "BBB". For example, when the Secure attribute is included in the HTTP request (with the Secure attribute) that is transmitted from the terminal device 20B, the controller 100 compares the Secure attribute with the information stored in the session list. However, the Secure attribute does not conform to the information stored in the session list. Thus, the controller 100 may determine that the session of the HTTP request transmitted from the terminal device 20B is invalid.

### 2. Second Embodiment

A description will be made on a second embodiment as an embodiment in which the operation differs on the basis of security settings of the information processing apparatus (the image forming apparatus). In the present embodiment, for example, a description will be made on a case where the operation is changed due to "presence/absence of a function to forward the HTTP connection to the HTTPS" as an example of the security setting.

Hardware and software configurations in the second embodiment are the same as those in the first embodiment. In the present embodiment, the description will be centered on differences from the first embodiment.

The "forwarding function" in the present embodiment means redirect processing to transmit an HTTP 30x response (for example, 301, 302, or 307) in order to prompt the client device to transmit the access request again by using the secure communication channel (for example, the HTTPS and the port 443) in response to the access request received via the non-secure communication channel (for example, the HTTP and the port 80).

At this time, the forwarding function is implemented in the form that the client side makes re-access by the HTTPS, instead of internal forwarding to forward a request to an other processing system inside the server. In addition, when the forwarding function is implemented, and the session information without the Secure attribute is received by the HTTPS, it can be determined that the session information is generated via the HTTP, and the inconsistency of the session can reliably be detected to invalidate the session.

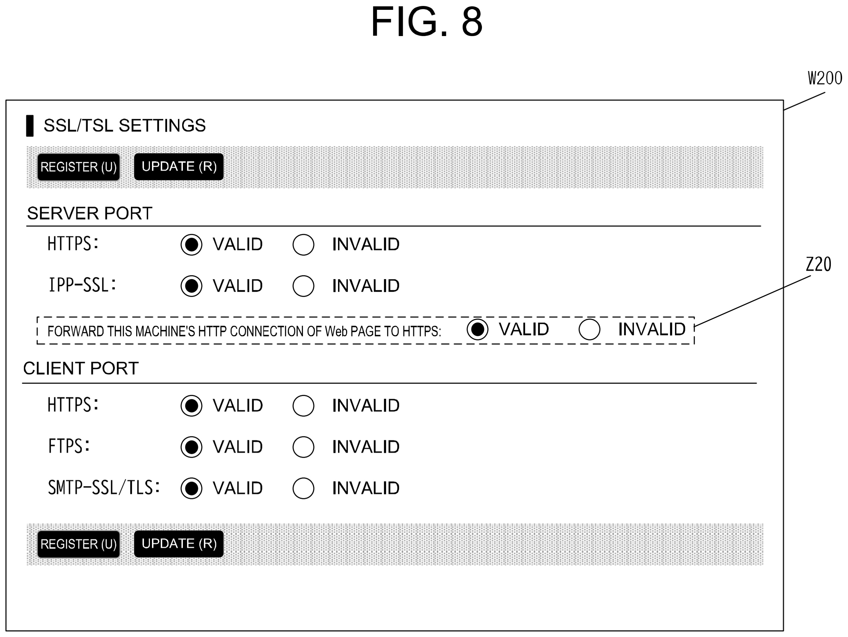

FIG. 8 is a view illustrating an example of a system setting screen W200. The system setting screen is a screen that is displayed by the system setting unit 1010, and is a display screen on which the settings of the image forming apparatus 10 can be made. FIG. 8 illustrates an example of a security setting screen.

As an example of the system settings, a setting indicated by Z20 is a setting item for setting validity/invalidity of the function to "forward the HTTP connection to the HTTPS". Here, the function to "forward the HTTP connection to the HTTPS" is a function (hereinafter, referred to as the "forwarding function") to redirect the access by the terminal device 20 as the client via the HTTP to the HTTPS for communication (hereinafter referred to as the "forwarding function"). Then, when the function to "forward the HTTP connection to the HTTPS" is turned "ON", the controller 100 implements the forwarding function. That is, the controller 100 validates the forwarding function. On the other hand, when the function to "forward the HTTP connection to the HTTPS" is turned "OFF", the controller 100 does not implement the forwarding function. That is, the controller 100 invalidates the forwarding function.

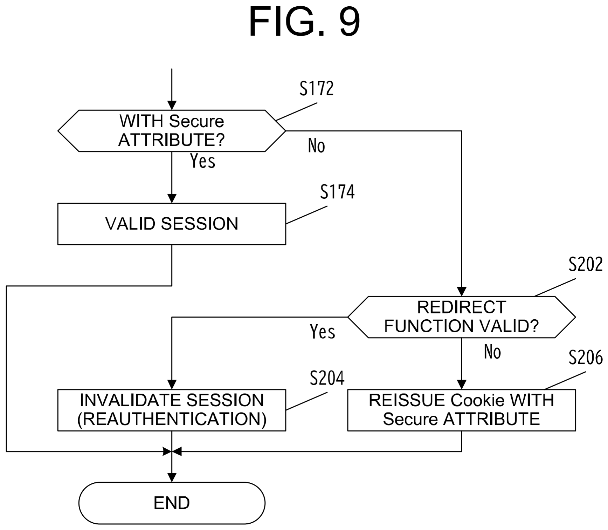

For example, FIG. 9 is a chart in which the processing for the HTTPS communication (S172 to S176) in FIG. 7 is replaced.

If the acquired cookie has the Secure attribute, the controller 100 determines that the session is valid (S172; Yes → S174).

On the other hand, if the acquired cookie does not have the Secure attribute, the controller 100 may switch the processing depending on whether the forwarding function is valid or invalid.

### (1) Case Where Forwarding Function is Valid

When the forwarding function is valid, the HTTP access from the client is forwarded to the HTTPS, and thus the actual session is always established (S102 to S110 in FIG. 6) by the HTTPS communication. As a result, the communication is determined as the HTTPS communication in S104 of FIG. 6, only the cookie added with the Secure attribute is generated by the processing in S106, and the cookie without the Secure attribute is not generated. Thus, the controller 100 may determine that the access using the cookie without the Secure attribute is the unauthorized access, and may uniformly invalidate the session.

If the Secure attribute is absent, and the forwarding function is valid (S172; No → S202; Yes), the controller 100 determines that the cookie is invalid, and invalidates the session (S204). After invalidating the session, the controller 100 may execute the reauthentication processing, for example.

### (2) Case Where Forwarding Function is Invalid

If the forwarding function is invalid, the controller 100 reissues the cookie that has the Secure attribute and inherits an other attribute (S202; No → S206). That is, while reissuing the cookie added with the Secure attribute, the controller 100 can maintain the authentication state of the user by inheriting the identification information such as the session ID.

This is because it is determined that the user has attempted the access by intentionally switching the communication to the HTTPS communication. In this case, the controller 100 discards or invalidates the cookie (without the Secure attribute), which is issued in the HTTP communication, can thereby prevent the reuse of the cookie in the HTTP communication, and can improve the security.

### 3. Effects

As it has been described so far, according to the above-described embodiments, in the case where the HTTP can be used after consideration of the security, the use of the cookie can be permitted for the HTTP access. Thus, it is possible to appropriately use the cookie by switching the setting content of the flag of the cookie depending on the HTTP communication or the HTTPS communication.

For example, such a method is available as a method for which realization of the secure session management and execution efficiency of a site are taken into consideration. In the method, web site pages are divided into pages that should be protected and pages that may not be protected, and the session is authenticated by using the cookie with the Secure attribute only when the page that should be protected is requested. In this way, the safe session management is realized.

In this method, the last session can be referred at the time of the second or subsequent access to the page that should be protected. Meanwhile, only the conventional page display processing is executed for the unprotected page. Thus, it is possible to suppress deterioration of the execution efficiency of the web site.

However, in the above method, it is necessary to set in advance whether to protect the page, and failure possibly occurs when the page is changed or newly added. Furthermore, in general, when transition between the protected page and the unprotected page is repeated, the processing, such as the reauthentication of the session and discarding of the session, is repeated, which is inefficient.

In consideration of the above, there is a possibility that a large number of the pages is divided into the protected or unprotected pages disproportionately. As a result, an effect of improving the page allocation cannot be expected. In the case where only the HTTP communication can be used due to limitation of the device or the like, the protected pages, which require the HTTPS communication, cannot be displayed at all.

The example of the above-described embodiment can suitably be applied to the following apparatuses. For example, there is an apparatus that manages the session by using the cookie for the apparatus setting screen that can be used on a main body of the image forming apparatus 10 or via the WEB. In such an apparatus, the page is displayed on the main body by using the HTTP. Meanwhile, the page may be communicated by using the safer HTTPS via the WEB that can be used by unspecified users.

In the case where the Secure attribute is added to all the cookies in order to ensure safety of the security, the session information can no longer be used for the setting page on the main body of the image forming apparatus. For this reason, the Secure attribute is added to the cookie to be issued only when the access is made by the HTTPS communication, and the cookie that is issued by the HTTPS communication is transmitted only in the HTTPS communication.

By switching the addition of the Secure flag according to the communication protocol, the service can be used without any problem in either case.

The example of the above-described embodiment can also suitably be applied to the following apparatus. In a case of an apparatus that has a function to redirect the access via the WEB from the HTTP communication to the HTTPS communication, when this function is valid, the HTTP communication is switched to the HTTPS communication. In this case, the Secure attribute is always added. Thus, when the cookie is inconsistent but the Secure attribute is absent, such access is regarded as the unauthorized access, the cookie is discarded, and the reauthentication can be requested.

Meanwhile, in the case where the function to redirect the HTTP communication to the HTTPS communication is invalid, and the user attempts the access by using the cookie without the Secure attribute in the HTTPS communication, the controller 100 assumes that the user who has accessed by the HTTP communication attempts to re-access by the HTTPS communication. Consequently, while the authentication information is inherited, the cookie without the Secure attribute is discarded, and the cookie with the Secure attribute can newly be issued.

As it has been described so far, even the apparatus main body that can use only the HTTP communication can safely use the session information via the WEB used by the unspecified users.

### 4. Modified Examples

The present disclosure is not limited to the embodiments described above, and various modifications can be made thereto.

That is, the technical scope of the present disclosure also includes embodiments that can be obtained by combining technical measures that are modified appropriately within a range not departing from the gist of the present disclosure.

In the above-described embodiments, the image forming apparatus has been described as the example of the information processing apparatus. However, the present disclosure can be applied to other apparatuses as the information processing apparatuses. For example, an example of the information processing apparatus only needs to be an apparatus that has a WEB server function, and may be the information processing apparatus such as a computer or a server device, the information processing apparatus such as a smartphone or a tablet, or a video device such as a camera. Examples thereof further include home appliances (such as an air conditioner, a refrigerator, and a television set) equipped with the Internet of things (IoT) function. The information processing apparatus is not limited to the stationary apparatus and may be a portable apparatus or an in-vehicle apparatus. For example, the in-vehicle apparatus may be a car navigation system.

Although the above-described embodiments are separately described for convenience of the description, the embodiments may be executed in combination within a possible range. The applicant intends to acquire the right to any of the techniques described in the specification through amendments, divisional applications, or the like.

The program that runs on each apparatus in each embodiment controls the CPU and the like (the program that causes the computer to function) to implement the functions in the above-described embodiments. The information that is handled by these apparatuses is temporarily stored in a temporary storage device (for example, the RAM) when being processed. Then, the information is stored in any of the various storage devices such as the ROM and the HDD and read, corrected, and written by the CPU when necessary.

Here, the recording medium that stores the program may be any of a semiconductor medium (for example, the ROM, a non-volatile memory card, or the like), an optical recording medium/magneto-optical recording medium (for example, a digital versatile disc (DVD), a compact disc (CD), a Blu-ray^{®} disc (BD), or the like), a magnetic recording medium (for example, a magnetic tape, a flexible disc, or the like), and the like.

In the case where the program is distributed in the market, the program can be stored in a portable recording medium for distribution, or can be transferred to a server computer that is connected via the network such as the Internet. In this case, it is needless to say that the storage device of the server device is also included in the present disclosure.

Furthermore, the above-described data may not be stored in the device but stored in an external device and called appropriately. For example, the data may be stored in a network-attached storage (NAS) or on the cloud.

The scope of the present disclosure is not limited to the configurations explicitly described in the present specification, and includes any combination of the techniques disclosed in the present specification. In the present disclosure, the configurations to be patented are described in the appended claims. However, it is not intended to exclude the configurations from the technical scope on the grounds that such configurations are not described in the claims.

In the present specification, the description including the terms "in a/the case of/where" and "when" each describe the example, and the configuration is not limited to the described content. Configurations other than those described with the term "in a/the case of/where" or "when" are also disclosed within the scope obvious to the person skilled in the art, and the applicant intends to acquire the right to such configurations.

The processing order and the data flow order described in the present specification are not limited to the described orders. For example, a configuration that is obtained by removing a part of the processing or switching the order is also disclosed, and the applicant intends to acquire the right to such a configuration.

The functions described in the embodiments are implemented by the respective devices but may be implemented by a single device or even by using an external server.

Each of the functional blocks and the various features of the apparatus used in the above-described embodiments may be installed or implemented by an electric circuit such as one or more integrated circuits. The electric circuit that is designed to implement the functions described in the present specification may be any of or a combination of two or more of a general-purpose processor, a digital signal processor (DSP), an application-specific integrated circuit (ASIC), a field-programmable gate array (FPGA) or an other programmable logic device, a discrete gate or transistor logic, and discrete hardware components. The general-purpose processor may be a microprocessor, a conventional processor, a controller, a microcontroller, or a state machine. The above-described electric circuit may be formed by a digital circuit or an analog circuit. In the case where an integrated circuit technique that replaces the current integrated circuit technique emerges as a result of advancement in the semiconductor technology, one or more aspects of the present disclosure can also use the new integrated circuit based on such technology.

### [Description of Reference Numerals]

1 System
10 Image forming apparatus
100 Controller
110 Memory
112 Storage
114 ROM
116 RAM
130 Display
140 Operation acceptor
150 Image reader
160 Image forming device
170 Communicator
20 Terminal device
30 Server device

## Claims

1. An information processing apparatus comprising:
a communicator (170) capable of communicating with an other device via an established communication channel; and
one or more controllers (100), wherein
the one or more controllers (100):
when receiving a request to establish a session from the other device via the communication channel, generate session information for identifying the session according to a state of the communication channel, through which the request is received;
transmit the generated session information to the other device via the communicator (170); and
invalidate the session based on the session information when the session information is received from the other device via the communicator (170) and the state of the communication channel, through which the session information is received, does not conform to a state of the communication channel corresponding to the session information.

2. The information processing apparatus according to claim 1, wherein
the one or more controllers (100):
add a Secure attribute to the session information when the communication channel, through which the request is received, is a secure communication channel, the Secure attribute being an attribute that requests the session information to be transmitted by being included in communication; and
invalidate the session based on session information when the session information is received from the other device via the communicator (170), when the communication channel, through which the session information is received, is a secure communication channel, and when the Secure attribute is not included in the session information.

3. The information processing apparatus according to claim 1, wherein
the one or more controllers (100):
do not add a Secure attribute to the session information when the communication channel, through which the request is received, is not a secure communication channel, the Secure attribute being an attribute that requests the session information to be transmitted by being included in communication; and
invalidate the session based on session information when the session information is received from the other device via the communicator (170), when the communication channel, through which the session information is received, is not a secure communication channel, and when the Secure attribute is included in the session information.

4. The information processing apparatus according to claim 3, wherein
the one or more controllers (100):
can implement a forwarding function to forward the communication in a non-secure first communication channel, through which the request is received from the other device, to a secure second communication channel; and
invalidate the session based on session information in the case where the forwarding function is implemented and the Secure attribute is not included in the session information when the session information is received from the other device via a secure communication channel.

5. The information processing apparatus according to claim 4, wherein
in the case where the forwarding function is not implemented, and the Secure attribute is not included in session information when the session information is received from the other device via a secure communication channel, the one or more controllers (100) generate session information having the Secure attribute and transmits the generated session information to the other device.

6. The information processing apparatus according to claim 5 further comprising:
memory (110) that stores the generated session information, wherein
the one or more controllers (100):
use the session information that is stored in the memory (110) when the session information having the Secure attribute is generated.

7. The information processing apparatus according to any one of claims 2 to 6, wherein
the secure communication channel is a communication channel compliant with Hypertext Transfer Protocol Secure (HTTPS).

8. The information processing apparatus according to claim 1, wherein
the one or more controllers (100) determine whether the communication channel is a secure communication channel on the basis of a port number of communication received by the communicator (170).

9. The information processing apparatus according to claim 1, wherein
the one or more controllers (100) determine whether the communication is secure communication on the basis of header information included in the communication.

10. The information processing apparatus according to claim 1, wherein
when invalidating the session, the one or more controllers (100) discard the session information and execute reauthentication processing.

11. The information processing apparatus according to claim 1, wherein
the forwarding function is a function to redirect a request from the other device by HTTP to HTTPS communication.

12. The information processing apparatus according to claim 4, wherein
when the forwarding function is valid, the one or more controllers (100) uniformly invalidate session information that does not have the Secure attribute.

13. An information processing apparatus capable of establishing a first communication channel established by an HTTP protocol and a second communication channel established by an HTTPS protocol with an other device, the information processing apparatus comprising:
a session information transmitter (1032) that transmits session information not added with a Secure attribute to the other device when receiving a session request from the other device via the first communication channel, and transmits session information added with a Secure attribute to the other device when receiving a session request from the other device via the second communication channel; and
a session information receiver (1034) that receives the session information from the other device via the first communication channel or the second communication channel, wherein
when the session information is received via the first communication channel, and the Secure attribute is included in the session information, a session based on the session information is invalidated, and
when the session information is received via the second communication channel, and the Secure attribute is not included in the session information, the session based on the session information is invalidated.

14. A communication method for establishing a session with an other device via a communication channel, the method comprising:
generating session information for identifying a session with the other device according to a state of the communication channel;
transmitting the generated session information to the other device; and
when the session information is received from the other device, and the state of the communication channel, through which the session information is received, does not conform to a state of the communication channel corresponding to the session information, invalidating the session based on the session information.
